# EUROPÄISCHE PATENTSCHRIFT

(11) **EP 2 541 273 B1**
(45) Veröffentlichungstag und Bekanntmachung des Hinweises auf die Patenterteilung: **22.05.2013**
(21) Anmeldenummer: 11171772.4
(22) Anmeldetag: 28.06.2011
(51) Int. Cl.: G01S 7/487, G01S 17/93

(54) **Erfassung und Abstandsbestimmung von Objekten**
Detection and measuring of distance between objects
Détection et détermination de distance d'objets

(43) Veröffentlichungstag der Anmeldung: 02.01.2013
(73) Patentinhaber: SICK AG, 79183 Waldkirch (DE)
(72) Erfinder: Sigmund, Jörg, 79098 Freiburg (DE); Mack, Stefan, Dr., 79104 Freiburg (DE); Kerp, Michael, 79183 Waldkirch (DE)
(74) Vertreter: Hehl, Ulrich

(56) Entgegenhaltungen:
- EP-A1- 1 085 346
- EP-A1- 1 124 142
- EP-A1- 1 450 128
- DE-A1-102009 057 104

## Beschreibung

Die Erfindung betrifft einen optoelektronischen Sensor und ein Verfahren zur Erfassung und Abstandsbestimmung von Objekten nach dem Oberbegriff von Anspruch 1 beziehungsweise 12.

Optoelektronische Sensoren werden in vielen Anwendungen zur Objekterfassung eingesetzt. Im einfacheren Falle handelt es sich dabei um Entfernungstaster, die in nur einer Erfassungsrichtung Objekte erkennen und deren Abstand ermitteln können.

Deutlich mehr räumliche Informationen bietet ein Laserscanner. Ein von einem Laser erzeugter Lichtstrahl überstreicht mit Hilfe einer Ablenkeinheit periodisch einen Überwachungsbereich. Das Licht wird an Objekten in dem Überwachungsbereich remittiert und in dem Scanner ausgewertet. Aus der Winkelstellung der Ablenkeinheit wird auf die Winkellage des Objektes und aus der Lichtlaufzeit unter Verwendung der Lichtgeschwindigkeit zusätzlich auf die Entfernung des Objektes von dem Laserscanner geschlossen. Dabei sind zwei grundsätzliche Prinzipien bekannt, die Lichtlaufzeit zu bestimmen. Bei phasenbasierten Verfahren wird das Sendelicht moduliert und die Phasenverschiebung des empfangenen gegenüber dem gesendeten Licht ausgewertet. Bei pulsbasierten Verfahren misst der Laserscanner die Laufzeit, bis ein ausgesandter Lichtpuls wieder empfangen wird.

Mit den Winkel- und Entfernungsangaben ist der Ort eines Objektes in dem Überwachungsbereich in zweidimensionalen Polarkoordinaten erfasst. Die dritte Raumkoordinate kann durch eine Relativbewegung in Querrichtung ebenfalls erfasst werden, beispielsweise durch einen weiteren Bewegungsfreiheitsgrad der Ablenkeinheit in dem Laserscanner oder indem das Objekt relativ zu dem Laserscanner bewegt wird. So können auch dreidimensionale Konturen ausgemessen werden.

Neben solchen Messanwendungen werden Laserscanner auch in der Sicherheitstechnik zur Überwachung einer Gefahrenquelle eingesetzt, wie sie beispielsweise eine gefährliche Maschine darstellt. Ein derartiger Sicherheitslaserscanner ist aus der DE 43 40 756 A1 bekannt. Dabei wird ein Schutzfeld überwacht, das während des Betriebs der Maschine vom Bedienpersonal nicht betreten werden darf. Erkennt der Laserscanner einen unzulässigen Schutzfeldeingriff, etwa ein Bein einer Bedienperson, so löst er einen Nothalt der Maschine aus. Andere Eingriffe in das Schutzfeld, beispielsweise durch statische Maschinenteile, können vorab als zulässig eingelernt werden. Oft sind den Schutzfeldern Warnfelder vorgelagert, wo Eingriffe zunächst nur zu einer Warnung führen, um den Schutzfeldeingriff und damit die Absicherung noch rechtzeitig zu verhindern und so die Verfügbarkeit der Anlage zu erhöhen. Sicherheitslaserscanner arbeiten meist pulsbasiert.

In der Sicherheitstechnik eingesetzte Sensoren müssen besonders zuverlässig arbeiten und deshalb hohe Sicherheitsanforderungen erfüllen, beispielsweise die Norm EN13849 für Maschinensicherheit und die Gerätenorm EN61496 für berührungslos wirkende Schutzeinrichtungen (BWS). Zur Erfüllung dieser Sicherheitsnormen sind eine Reihe von Maßnahmen zu treffen, wie beispielsweise sichere elektronische Auswertung durch redundante, diversitäre Elektronik, Funktionsüberwachung oder speziell Überwachung der Verschmutzung optischer Bauteile, insbesondere einer Frontscheibe, und/oder Vorsehen von einzelnen Testzielen mit definierten Reflexionsgraden, die unter den entsprechenden Scanwinkeln erkannt werden müssen.

Sollen Laserscanner im Outdoorbereich eingesetzt werden, so muss mit einer Lufttrübung durch Nebel, Staub oder ähnliches gerechnet werden. Die dadurch verminderte Sichtweite reduziert durch Streuverluste die energetische Reichweite des Laserscanners. Je nach Vorgehen bei der Auswertung kann es sogar zu Fehlabschalten aufgrund einer Blendung durch das von der Lufttrübung verursachte Signal kommen. Das eigentliche Zielobjekt wird also nicht mehr erkannt beziehungsweise ein Nebelsignal wird fälschlich als Objekt interpretiert.

Herkömmlich werden unterschiedliche Auswertungsverfahren eingesetzt, um aus dem Empfangssignal Informationen über die Objekte in dem Erfassungsbereich und deren Objektabstand zu gewinnen. Bei einem Schwellwertverfahren wird eine Überschreitung einer Signalschwelle als Objektsignal interpretiert. Die Höhe der Schwelle orientiert sich an dem kleinsten zu detektierenden Signal, also etwa einem minimal remittierenden Objekt am Rand der Reichweite. Das führt bei einer Schwellbewertung leicht zu einer Fehlschaltung, denn wegen der quadratisch mit dem Abstand abfallenden Intensität des Empfangssignals überschreitet ein durch Nebel oder ähnliche Lufttrübungen erzeugtes Signal gerade im Nahbereich rasch die eingestellte Schwelle. Ein Heraufsetzen der Schwelle ist aber nicht möglich, weil dann ein fernes, schwach remittierendes Ziel unerkannt bliebe. Ein einfacher schwellbasierter Sensor ist in einer Umgebung mit Lufttrübung nicht arbeitsfähig, weil er zu früh abschaltet und damit nicht verfügbar ist.

Ein herkömmlicher Versuch einer Abhilfemaßnahme besteht darin, die Schwelle mit zunehmendem Abstand herabzusetzen. Es gelingt aber zumindest in der Sicherheitstechnik nicht, eine geeignete entfernungsabhängige Schwelle zu definieren, die in allen Situationen zuverlässig zwischen einem Nebelsignal und einem zu detektierenden Objekt unterscheidet.

Manche schwellbasierte herkömmliche Laserscanner erfassen mehr als nur ein Intensitätsmaximum. Solche Sensoren sind zumindest nicht gänzlich blind gegenüber Zielen, die in einer Lufttrübung oder dahinter liegen. Da aber, wie später noch im einzelnen erläutert, eine Lufttrübung nicht nur ein Intensitätsmaximum erzeugt, genügt auch eine solche Mehrfacherfassung nicht für eine zuverlässige Objekterfassung im Outdoorbereich.

Eine andere Klasse von Laserscarinern bewertet das Empfangssignal nicht mit einer Schwelle, sondern betrachtet die vollständige zeitabhängige Echokurve, die auf einen Sendepuls folgt. Dazu wird das Empfangssignal mit einem A/D-Wandler erfasst und der gespeicherte, vollständige Kurvenzug anschließend mit einem Mustererkennungsverfahren bewertet. Dieser Ansatz wird beispielsweise in der EP 2 182 378 A1 verfolgt. Nachteilig hieran ist, dass ein A/D-Wandler mit einer sehr hohen Samplingrate benötigt wird, um Pulslagen im Nanosekundenbereich und darunter erfassen zu können. Auch die Auswertungselektronik muss entsprechend leistungsfähig sein. Das treibt nicht nur die Herstellkosten, sondern auch den Leistungsbedarf des Laserscanners nach oben.

Ein weiteres Problem besteht darin, dass die Signalkurve möglichst verzerrungsfrei abzubilden ist, da die Objektabstände ansonsten nicht hochgenau daraus abgeleitet werden könnten. Aufgrund der hohen Dynamikanforderungen über mehrere Größenordnungen leisten dies ebenfalls nur teure Bauteile. In der EP 2 182 377 A1 wird das Problem der Dynamikbereiche durch Aufteilung in einen empfindlicheren und einen unempfindlicheren Empfangspfad gelöst. Dadurch werden aber sogar gleich zwei hochwertige A/D-Wandler benötigt, oder es müssen Lösungen gefunden werden, wie der vorhandene A/D-Wandler doppelt genutzt werden kann. Eine zuverlässige Unterscheidungsmöglichkeit zwischen Intensitätsmaxima, die einem zu detektierenden Objekt zuzuordnen sind und solchen, die aufgrund von Sichttrübungen entstehen, wird in der EP 2 182 377 A1 nicht gesucht und demzufolge nicht angegeben.

Die DE 20 2009 057 104 A1 offenbart einen entfernungsmessenden Laserscanner, welcher sein Empfangssignal aufzeichnet und darin Empfangspulse identifiziert. Es wird dann anhand der Pulsform, genauer der Steilheit der Flanken der Empfangspulse entschieden, ob ein jeweiliger Empfangspuls von einem optisch harten Ziel, wie einer Person oder einem Objekt, oder einem optisch weichen Ziel erzeugt wird, wie Staub oder anderen Störern. In einer besonderen Ausführungsform wird vorgeschlagen, die Empfangspulse in einer Spektralanalyse zu untersuchen, ohne dies näher zu konkretisieren.

In der EP 1 1085 346 A1 wird ein Verfahren zur Messung der Entfernung von Objekten, atmosphärischen Partikeln und dergleichen mittels Lidar- oder Laserradar-Signalen beschrieben. Dabei wird eine Kreuzkorrelationsfunktion des Empfangssignals mit dem Sendesignal nach inverser Filterung mit Hilfe von Gauß-Funktionen modelliert, die jeweils ein vermutetes Rückstreuereignis repräsentieren. Folglich werden die Empfangspulse durch die Parameter der Gauß-Funktionen beschrieben, so dass sich daraus die remittierte Energie an und die Position von sämtlichen Objekten im Messstrahl bestimmen lassen.

Bei einem System zur Ableitung geodätischer Entfernungsinformationen gemäß EP 1 450 128 A1 werden der Sensor, seine Sende- und Empfangssignale und die angetasteten Objekte in einem systemtheoretischen Ansatz untersucht. Dabei wird das System durch Wahl eines geeigneten Sendesignals mit wenigstens zwei Modulationsfrequenzen angeregt.

Es ist daher Aufgabe der Erfindung, den Einsatz eines entfernungsmessenden optoelektronischen Sensors im Outdoorbereich zu ermöglichen.

Diese Aufgabe wird durch einen optoelektronischen Sensor und ein Verfahren zur Erfassung und Abstandsbestimmung von Objekten nach Anspruch 1 beziehungsweise 12 gelöst. Dabei geht die erfindungsgemäße Lösung von dem Grundgedanken aus, dass auch Sichttrübungen zu Remission und einem entfernungsabhängigen Empfangssignal führen. Das Gesamtempfangssignal wird daher als Überlagerung aus einem ersten Teilempfangssignal, welches von den eigentlich zu messenden festen Körpern im Überwachungsbereich erzeugt wird, und einem zweiten Teilempfangssignal aufgrund von Sicht- oder Lufttrübungen aufgefasst, etwa Nebel, Staub oder dergleichen. Diese beiden Signalanteile werden voneinander getrennt und einzeln ausgewertet. Dadurch ergibt sich die Chance, das zweite Teilempfangssignal nicht einfach als Störung zu eliminieren, sondern als Quelle wertvoller Zusatzinformationen zu nutzen. Zur Trennung wird ein Splitter beziehungsweise eine Frequenzweiche verwendet, welche die Überlagerung auftrennen kann, weil die Sichttrübung vergleichsweise langsame Signaländerungen verursacht.

Die Erfindung hat den Vorteil, dass Objekte auch in Umgebungen mit Sichttrübung zuverlässig erkannt werden. Damit wird die Extraktion des Echos eines harten Zieles, also eines zu detektierenden festen Objekts, von dem überlagernden Signal aufgrund der die Sichttrübung bewirkenden weichen Ziele ermöglicht. In dem ersten Teilempfangssignal sind die Signalanteile solcher weicher Ziele unterdrückt. Außerdem kann aufgrund des zweiten Teilempfangssignals die Sichttrübung erkannt und bewertet werden. Dadurch kann die Vertrauenswürdigkeit der erfassten Objektabstände bewertet werden. Außerdem wird eine Klassifizierung der Störung durch weiche Ziele unterstützt, etwa um die Anwendungsbedingungen anzupassen oder zumindest zu protokollieren. Der zusätzliche Hardwareaufwand bleibt mit dem Splitterelement und einigen Auswertungsfunktionen sehr gering.

Der Sendelichtstrahl weist bevorzugt eine Vielzahl aufeinanderfolgender Einzellichtpulse auf, wobei die Auswertungseinheit dafür ausgebildet ist, eine Vielzahl von Empfangspulsen in dem ersten Teilempfangssignal in einem zeitlichen Histogramm zu sammeln und den Objektabstand aus dem Histogramm zu bestimmen. Ein solches Pulsmittelungsverfahren ist wesentlich robuster als ein Einzelpulsverfahren. Wie oben schon erläutert, ist es generell wichtig, das Empfangssignal verzerrungsfrei aufzunehmen. Ansonsten wird der Empfangspuls und seine zeitliche Position nicht präzise genug erfasst. Ein Vorteil eines Pulsmittelungsverfahrens liegt in der höheren Dynamiktoleranz, denn ein Teil der Dynamik wird durch die Mittelung aufgefangen und muss daher nicht vollständig von der Empfangselektronik bewältigt werden.

Vorteilhafterweise ist die Auswertungseinheit dafür ausgebildet, eine Vielzahl von Abschnitten des zweiten Teilempfangssignals, die auf einen ausgesandten Einzellichtpuls folgen, in einem zeitlichen Histogramm zu sammeln und aus dem Histogramm ein Maß für die Sichttrübung zu bestimmen. Demnach wird das zweite Teilempfangssignal durch ein Pulsmittelungsverfahren bewertet. Bei dessen Aufnahme ist eine verzerrungsfreie Verstärkung wichtig, weil nur so das Vorwissen über die erwartete Pulsform, also die Signaldynamik des Sensors, die eindeutige Identifikation eines durch Sichttrübungen erzeugten Signals ermöglicht. Bei einem Pulsmittelungsverfahren wird ein weitaus größerer Bereich von Sichttrübungen sicher erkannt, denn ein übersteuertes zweites Teilempfangssignal tritt erst bei deutlich stärkeren Sichttrübungen auf als im Falle eines Einzelpulsverfahrens.

Der Sensor ist bevorzugt als Laserscanner ausgebildet, indem der Sensor eine bewegliche Ablenkeinheit zur periodischen Ablenkung des Sendelichtstrahls in den Überwachungsbereich und eine Winkelmesseinheit zur Erzeugung von Winkelpositionssignalen in Abhängigkeit von einer Winkelstellung der Ablenkeinheit aufweist. In einem Laserscanner werden mit Hilfe einer beweglichen, insbesondere drehbaren Ablenkeinheit Objektpositionen nicht nur längs einer Sichtlinie, sondern in einer ganzen Abtastebene erfasst. Dabei ist die Auswertungseinheit insbesondere dafür ausgebildet, jeweils anhand des Winkelpositionssignals eine Gruppe von Empfangspulsen auszuwählen, die in einem Histogramm gesammelt wird, und den aus dem Histogramm der Gruppe bestimmten Objektabstand einem durch das Winkelpositionssignal bezeichneten Erfassungswinkel zuzuordnen. Wird zur Entfernungsbestimmung ein Pulsmittelungsverfahren eingesetzt, so wird eine Vielzahl von Ereignissen, nämlich auf einen Einzelpuls folgenden Empfangssignalen, über einen bestimmten Winkelbereich in einem Histogramm gesammelt. Dabei besteht eine Austauschbeziehung zwischen Reichweite, Drehfrequenz der Ablenkeinheit (Scanfrequenz), Wiederholfrequenz der Sendepulse und Winkelauflösung. Denn beispielsweise kann durch eine längere Mittelungszeit, also das Sammeln einer größeren Anzahl von Ereignissen, eine größere Reichweite erzielt werden, weil die größere Statistiktiefe das Signal/Rausch-Verhältnis weiter verbessert. Die längere Mittelungszeit wiederum kann durch langsamere Drehbewegung der Ablenkeinheit oder durch das Sammeln von Ereignissen über einen größeren Winkelbereich gewonnen werden. Auf ähnliche Weise können die genannten Größen der Austauschbeziehung optimiert und adaptiert werden.

Die Auswertungseinheit ist bevorzugt dafür ausgebildet, für den ersten Teilempfangspfad Gruppen zu einer hohen Winkelauflösung, insbesondere von höchstens 2°, und/oder für den zweiten Teilempfangspfad Gruppen zu einer geringeren Winkelauflösung, insbesondere von mindestens 3°, zu bilden. Die Begriffe hohe Winkelauflösung und geringere Winkelauflösung sind hier in erster Linie relativ zueinander zu verstehen. Absolut kann die Winkelauflösung für die eigentliche Objekterkennung aus dem ersten Teilempfangssignal beispielsweise höchstens 5°, 2,5°, 1° oder sogar nur 0,5° oder noch weniger betragen. Dagegen beträgt die Winkelauflösung für die Sichttrübungserkennung aufgrund des zweiten Teilempfangssignals beispielsweise mindestens 3°, 5°, 10° oder 20° oder noch mehr. Die unterschiedliche Winkelauflösung beruht auf der Annahme, dass Sichttrübungen im Gegensatz zu den kleinsten zu erkennenden Objektstrukturen nicht nur lokal in einem engen Winkelbereich auftreten. Durch das Sammeln einer größeren Anzahl von Ereignissen kann daher das Signal-Rausch-Verhältnis für den zweiten Teilempfangspfad verbessert und damit die Sichttrübung genauer bestimmt werden. Alternativ zu einer unterschiedlichen Winkelauflösung kann für die Sichttrübungsmessung und die eigentliche Entfernungsmessung dieselbe Winkelauflösung verwendet werden.

In dem ersten Teilempfangspfad ist bevorzugt ein analoger Vorverarbeiter vorgesehen, der ein Filterelement aufweist, um jeweils den Empfangspuls zu einem bipolaren vorverarbeiteten Signal umzuwandeln und über einen A/D-Wandler der Auswertungseinheit zuzuführen. Die Digitalisierung erfolgt demnach erst nach der Auftrennung in das erste Teilempfangssignal und das zweite Teilempfangssignal. Die Bestimmung der zeitlichen Lage eines Empfangspulses ist in dem bipolaren Signal deutlich genauer möglich als in dem ursprünglichen Signal. Dabei weist insbesondere der analoge Vorverarbeiter einen Begrenzungsverstärker zur Verstärkung des positiven bzw. negativen Anteils des Signals bis auf einen Sättigungswert auf, und der A/D-Wandler ist ein Binarisierer. Jedes Ereignis liefert in dieser Ausführungsform nur einen Beitrag von einem Bit zu den Histogrammen für das Pulsmittelungsverfahren. Das führt zu einer einfachen Auswertung, die geringe Ansprüche an die Auswertungshardware stellt und sehr schnell ausgeführt werden kann.

Vorteilhafterweise ist das Splitterelement zugleich als das Filterelement ausgebildet. In der Ausführungsform des letzten Absatzes ist bereits ein Filterelement vorgesehen, welches beispielsweise als Bandpass ausgebildet ist, um ein bipolares Signal zu erzeugen. Diese Filtereigenschaften können zugleich ausgenutzt werden, um die Aufteilung in das erste Teilempfangssignal und das zweite Teilempfangssignal zu realisieren. Durch diese Doppelfunktion kann ein Bauteil eingespart werden.

Bevorzugt ist in dem ersten Teilempfangspfad ein erster A/D-Wandler und in dem zweiten Teilempfangspfad ein zweiter A/D-Wandler vorgesehen. In diesem Fall werden also beide Teilempfangssignale nach der Auftrennung parallel zueinander digitalisiert und dann in zwei digitalen Auswertungskanälen ausgewertet. Dabei ist insbesondere die Abtastfrequenz des zweiten A/D-Wandlers geringer als die Abtastfrequenz des ersten A/D-Wandlers. Es genügt also ein einfacheres Bauteil als A/D-Wandler in dem zweiten Teilempfangspfad. Für das zweite Teilempfangssignal genügt eine etwas geringere zeitliche Auflösung, weil es hier nicht auf die hochpräzise Bestimmung von Empfangszeitpunkten ankommt, um genaue Objektabstände zu bestimmen. Beide A/D-Wandler können auf demselben Bauteil, insbesondere FPGA implementiert sein.

Die Auswertungseinheit ist bevorzugt dafür ausgebildet, das zweite Teilempfangssignal aufzuintegrieren, insbesondere als Summe über das Histogramm, um anhand der so erhaltenen Pegelinformation das Maß der Sichttrübung zu bestimmen. Das Integral unter dem zweiten Teilempfangssignal entspricht der gesamten Energie, die aufgrund von diffuser Remission an weichen Zielen empfangen wird. Dies bildet damit ein Maß für die Sichttrübung. Dieses Maß kann ausgegeben werden, um die vorliegenden Einsatzbedingungen anzuzeigen. Danach kann die Reichweite, insbesondere die sichere Reichweite bei Anwendungen in der Sicherheitstechnik, entsprechend angepasst werden. Daraus lassen sich Maßnahmen ableiten, indem etwa die Geschwindigkeit von mit dem Sensor abgesicherten führerlosen Transportsystemen verringert wird. Indem die Sichttrübung klassifiziert beziehungsweise vermessen ist, wird die sicherheitstechnische Anwendung im Outdoorbereich ermöglicht, weil der Sensor erkennt, ob die Bedingungen für eine sichere Objekterfassung noch ausreichen und gegebenenfalls Absicherungsmaßnahmen einleiten kann.

Eine dem Lichtempfänger vorgeordnete Empfangsoptik ist bevorzugt derart ausgebildet, dass das Empfangssignal eine periodisch modulierte Intensitätscharakteristik in Abhängigkeit von dem Objektabstand mit einer Periodenlänge aufweist, die groß gegen die Dauer eines Sendepulses ist und höchstens der halben maximalen Reichweite des Sensors entspricht. Die Intensitätscharakteristik in Abhängigkeit von dem Objektabstand, die auch als Signaldynamik bezeichnet wird, ist aufgrund von Eigenschaften der Empfangsoptik und wegen des mit der Entfernung quadratischen Energieabfalls nicht flach. Dasselbe Objekt erzeugt also abhängig von seinem Objektabstand einen unterschiedlichen Empfangspuls. Dieser intrinsischen Signaldynamik kann man durch entsprechendes Optikdesign eine künstliche Modulation überlagern, die praktisch als Signatur dient, um ein von Sichttrübungen verursachtes Empfangssignal zu erkennen. Damit die Modulation nicht die Bestimmung der zeitlichen Lage der eigentlichen Empfangspulse von zu erfassenden Objekten beeinträchtigt, sollte die Ortsfrequenz außerhalb der Frequenzanteile der Sendepulse liegen. Dies wird beispielsweise mit einer Periode von einigen Metern, insbesondere 2m erreicht. Die Empfangspulse sind dagegen so kurz, dass sie kaum beeinflusst werden. Praktisch werden die Pulse durch die Modulation der Signaldynamik nur als Ganzes um einen Faktor nahe bei Eins angehoben oder abgesenkt. Andererseits sollte die Modulationsperiode auch nicht zu lang sein, beispielsweise kleiner als die halbe Reichweite des Sensors, damit die Modulation auch noch innerhalb der Reichweite erkennbar bleibt.

Die Auswertungseinheit ist bevorzugt dafür ausgebildet, eine Sichttrübung anhand einer Modulation des zweiten Teilempfangssignals zu erkennen. Die Auswertungseinheit wertet also das zweite Teilempfangssignal beispielsweise durch Korrelation mit der bekannten Signaldynamik aus. Damit wird die Sichttrübung zuverlässig erkannt, gemessen und von anderen Störungen unterschieden. Es ist in diesem Fall nicht einmal notwendig, das zweite Teilempfangssignal zu digitalisieren. Die Amplitude der bekannten Modulation der Signaldynamik kann stattdessen auch analog erkannt werden. Der Sensor ist bevorzugt als sicherer Laserscanner ausgebildet, der einen sicheren Ausgang aufweist und dessen Auswertungseinheit dafür ausgebildet ist, bei Erkennen eines unzulässigen Eingriffs in ein vorgebbares Schutzfeld innerhalb des Überwachungsbereichs ein Abschaltsignal über den sicheren Ausgang auszugeben. Aufgrund des erfindungsgemäß verbesserten Umgangs mit Sichttrübungen werden sicherheitstechnische Anwendungen auch im Outdoorbereich beziehungsweise in staubigen oder anders verunreinigten Umgebungen möglich.

Das erfindungsgemäße Verfahren kann auf ähnliche Weise weitergebildet werden und zeigt dabei ähnliche Vorteile. Derartige vorteilhafte Merkmale sind beispielhaft, aber nicht abschließend in den sich an die unabhängigen Ansprüche anschließenden Unteransprüchen beschrieben.

Die Erfindung wird nachstehend auch hinsichtlich weiterer Merkmale und Vorteile beispielhaft anhand von Ausführungsformen und unter Bezug auf die beigefügte Zeichnung näher erläutert. Die Abbildungen der Zeichnung zeigen in:
- Fig. 1: eine schematische Schnittdarstellung einer beispielhaften Ausführungsform eines erfindungsgemäßen Sicherheitssensors;
- Fig. 2a: ein beispielhaftes idealisiertes Empfangssignal an harten Zielen wie Schnee, Regen oder Staubpartikeln;
- Fig. 2b: ein beispielhaftes idealisiertes Empfangssignal an weichen Zielen wie bei Nebel oder Ruß;
- Fig. 2c: ein beispielhaftes Empfangssignal eines harten Ziels in einer Umgebung mit weichen Zielen;
- Fig. 3: ein Blockschaltbild des Sende- und Empfangspfades des Sensors gemäß Figur 1;
- Fig .4: eine Darstellung der Signale in verschiedenen Verarbeitungsstufen der Vorverarbeitung und Auswertung gemäß Figur 3;
- Fig. 5a: ein beispielhaftes Empfangssignal des Sensors gemäß Figur 1;
- Fig. 5b: ein beispielhaftes erstes Teilempfangssignal in einem ersten Teilempfangspfad gemäß Figur 3;
- Fig. 5c: ein beispielhaftes zweites Teilempfangssignal in einem zweiten Teilempfangspfad gemäß Figur 3; und
- Figur 6: ein beispielhafter Verlauf des Empfangssignals bei einer Modulation der Signaldynamik zur Identifizierung von Sichttrübungen.

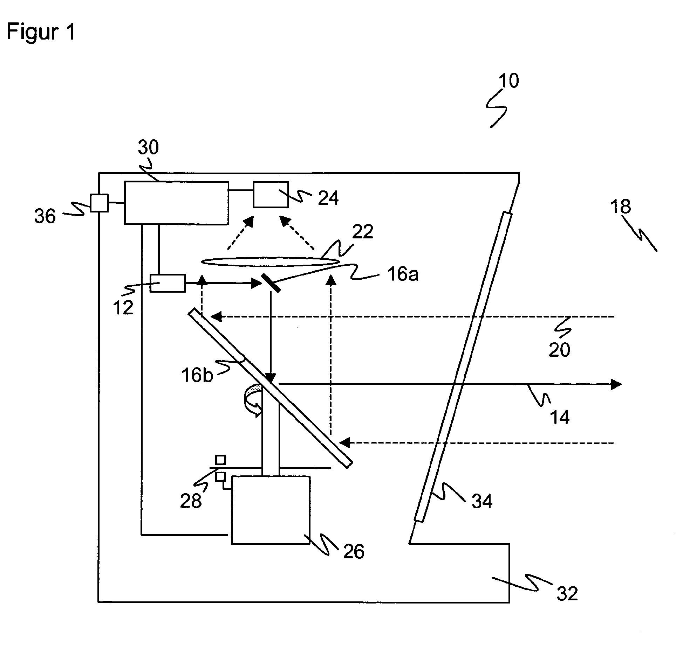

Figur 1 zeigt eine schematische Schnittdarstellung durch einen erfindungsgemäßen Laserscanner 10. Die Erfindung wird an diesem Beispiel beschrieben, umfasst aber auch andere optoelektronische Sensoren zur Erfassung und Abstandsbestimmung von Objekten wie beispielsweise Entfernungstaster.

Ein von einem Lichtsender 12, beispielsweise einem Laser, erzeugter Lichtstrahl 14, der einzelne Lichtimpulse aufweist, wird über Lichtablenkeinheiten 16a-b in einen Überwachungsbereich 18 gelenkt und dort von einem gegebenenfalls vorhandenen Objekt remittiert. Das remittierte Licht 20 gelangt wieder zu dem Sicherheitslaserscanner 10 zurück und wird dort über die Ablenkeinheit 16b und mittels einer Empfangsoptik 22 von einem Lichtempfänger 24 detektiert, beispielsweise einer Photodiode.

Die Lichtablenkeinheit 16b ist in der Regel als Drehspiegel ausgestaltet, die durch Antrieb eines Motors 26 kontinuierlich rotiert. Die jeweilige Winkelstellung der Lichtablenkeinheit 16b wird über einen Encoder 28 erfasst. Der von dem Lichtsender 12 erzeugte Lichtstrahl 14 überstreicht somit den durch die Rotationsbewegung erzeugten Überwachungsbereich 18. Wird ein von dem Lichtempfänger 24 empfangenes reflektiertes Lichtsignal 20 aus dem Überwachungsbereich 18 empfangen, so kann aus der Winkelstellung der Ablenkeinheit 16b mittels des Encoders 28 auf die Winkellage des Objektes in dem Überwachungsbereich 18 geschlossen werden.

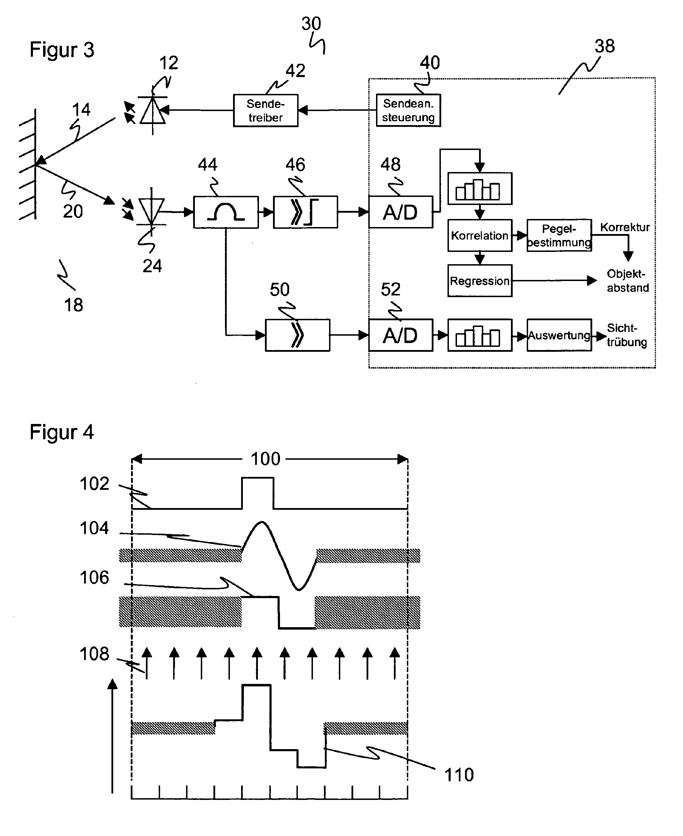

Zusätzlich wird die Laufzeit der einzelnen Laserlichtpulse von ihrem Aussenden bis zu dem Empfang nach Reflexion an dem Objekt in dem Überwachungsbereich 18 ermittelt. Aus der Lichtlaufzeit wird unter Verwendung der Lichtgeschwindigkeit auf die Entfernung des Objektes von dem Laserscanner 10 geschlossen. Diese Auswertung erfolgt in einer Auswertungseinheit 30, die dafür mit dem Lichtsender 12, dem Lichtempfänger 24, dem Motor 26 und dem Encoder 28 verbunden ist. Somit stehen über den Winkel und die Entfernung zweidimensionale Polarkoordinaten aller Objekte in dem Überwachungsbereich 18 zur Verfügung. Die Auswertungseinheit 30 verwendet für die Abstandsbestimmung vorzugsweise ein Pulsmittelungsverfahren, das weiter unten anhand der Figuren 3 und 4 näher erläutert wird. Alle genannten Funktionskomponenten sind in einem Gehäuse 32 angeordnet, das im Bereich des Lichtaus- und Lichteintritts eine Frontscheibe 34 aufweist.

In einer sicherheitstechnischen Anwendung vergleicht die Auswertungseinheit 30 die Position der erfassten Objekte mit einem oder mehreren Schutzfeldern, deren Geometrie der Auswertungseinheit 30 durch entsprechende Parameter vorgegeben oder konfiguriert ist. Damit erkennt die Auswertungseinheit 30, ob ein Schutzfeld verletzt ist, also ob sich ein unzulässiges Objekt darin befindet, und schaltet je nach Ergebnis einen Sicherheitsausgang 36 (OSSD, Output Signal Switching Device). Dadurch wird beispielsweise ein Nothalt einer angeschlossenen und von dem Laserscanner 10 überwachten Maschine ausgelöst. Ein solcher Laserscanner wird durch Erfüllung der einleitend genannten Normen und die dafür erforderlichen Maßnahmen als Sicherheitslaserscanner ausgebildet.

Der Laserscanner 10 ist auch unter Umgebungsbedingungen mit eingeschränkter Sicht einsetzbar, also outdoorfähig beziehungsweise robust gegenüber verunreinigten Umgebungen. Hierzu müssen unter den möglichen Zielen des Laserscanners 10 harte und weiche Ziele unterschieden werden.

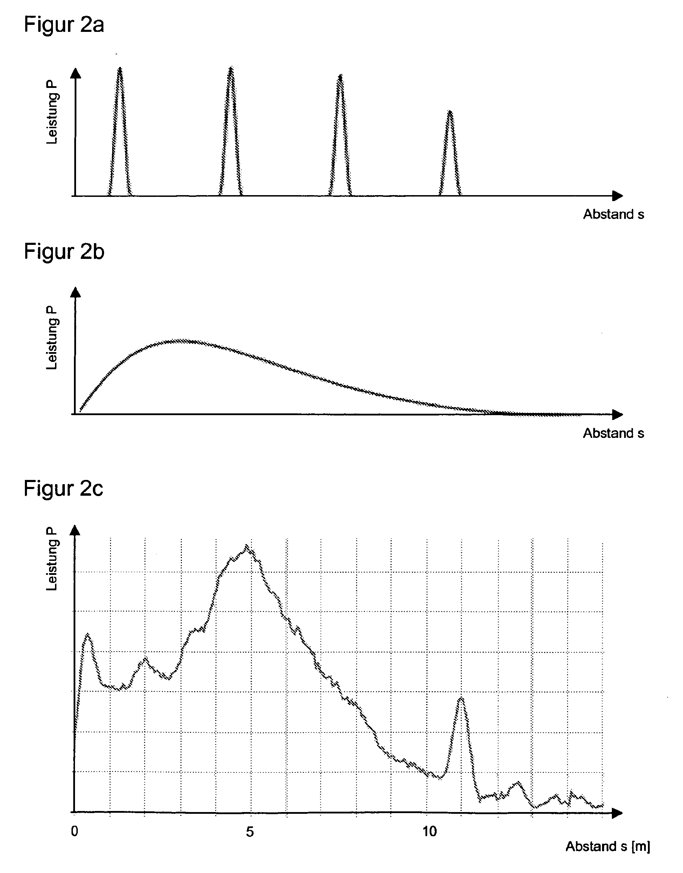

Ein hartes Ziel ist ein Objekt, welches ein kurzes Signalecho erzeugt. Beispiele für harte Ziele sind feste Körper, die als Messobjekte dienen, aber auch störende Objekte wie Schnee, Regen, Späne oder grober Staub. Figur 2a zeigt ein idealisiertes Empfangssignal des Laserscanners 10, bei dem kleine Störobjekte zeitlich vorgelagerte Empfangspulse verursachen, die zu einer Fehlmessung führen können. Je nach Abstand der Störobjekte und deren Remissionsverhalten ist die zurückgestreute Energie unterschiedlich. Es verbleibt aber für das Messobjekt ein identifizierbarer Empfangspuls. Für die Unterscheidung zwischen Messobjekt und störenden Objekten innerhalb der Klasse der harten Ziele können Parameter wie Mindestgrößen oder Mindestaufenthaltsdauern herangezogen werden.

Im Gegensatz zu harten Zielen erzeugen weiche Ziele ein breites Signalecho, welches idealisiert in Figur 2b dargestellt ist. Dieses Empfangssignal wird im Folgenden als Nebelsignal bezeichnet, denn weiche Ziele bilden Medien mit einer großen Anzahl kleiner Partikel, etwa Nebel, feiner Staub oder Ruß. Die zahlreichen Partikel bilden dabei eine Vielzahl einzelner Streuzentren.

In einer realen Anwendung mit Sichttrübung befindet sich das Messobjekt als hartes Ziel in einer Umgebung, die ein weiches Ziel darstellt. Entsprechend erhält man als Empfangssignal eine Überlagerung, wie beispielhaft in Figur 2c gezeigt. Es bedarf einiger Interpretation, in diesem Empfangssignal das Messobjekt wiederzufinden. Zunächst entspricht die Pulsform eines Empfangspulse von einem harten Ziel der Pulsform des Sendepulses. Die Pulsform des Nebelsignals dagegen ist eine Faltung der Pulsform des Sendepulses mit der Signaldynamik. Dabei ist die Signaldynamik beziehungsweise die abstandsabhängige Intensitätscharakteristik die entfernungsabhängige Detektionsempfindlichkeit für das Antasten eines ebenen, diffus remittierenden Zieles. Die Signaldynamik ist im Wesentlichen eine Eigenschaft der Empfangsoptik des Laserscanners 10. Die Signaldynamik wird im Idealfall so ausgelegt, dass bis kurz hinter der Frontscheibe 34 praktisch kein Signal auftritt, so dass Reflexe an der Frontscheibe 34 möglichst kein messbares Störsignal verursachen. Danach sollte die Signaldynamik bis zur maximalen sicheren Reichweite möglichst konstant sein. Hinter der maximalen sicheren Reichweite bis hin zur physikalischen maximalen Reichweite fällt die Signaldynamik dann quadratisch ab.

Dieses Idealbild für die Signaldynamik wird in der Realität nur näherungsweise erreicht. Dazu wird beispielsweise die Empfangsoptik mit einer Mehrzonenlinse ausgestattet, so dass in der Signaldynamik mehrere lokale Maxima entsprechend der mehreren Zonen entstehen. In dem Beispiel der Figur 2c liegen diese lokalen Maxima bei ca. 0,3m, 2m und 5m. Das dort dargestellte Empfangssignal zeigt also in der Hauptsache die Faltung dieser durch das Optikdesign bestimmten Signaldynamik mit der Sendepulsform. Das eigentliche Messsignal, in dem gezeigten Beispiel ein Empfangspuls bei ca. 11m, ist sowohl in Breite als auch Amplitude wesentlich kleiner als das Nebelsignal. Ein weiteres Signal von einem harten Ziel, nämlich einer Schneeflocke kurz hinter der Frontscheibe 36, überlagert sich mit dem ersten lokalen Maximum der Signaldynamik bei 0,3m.

Das Messsignal bei ca. 11 m kann somit anhand seiner Pulsform und dem an sich aufgrund der Signaldynamik bekannten Verlauf des Nebelsignals identifiziert werden. Dabei ist wichtig, dass die Signaldynamik keine Feinstruktur besitzt, die fälschlich als Messsignal interpretiert werden könnte. Anders formuliert darf das Ortsfrequenzspektrum der Signaldynamik nicht oder zumindest nicht wesentlich mit dem zeitlichen Spektrum der Sende- und damit Empfangspulsform überlappen.

Um das Messsignal und dessen zeitliche Lage zu bestimmen, soll das Nebelsignal von dem übrigen Signal separiert werden. Dies ist an sich mit einem Einzelpulsverfahren denkbar. Beschrieben wird das Verfahren aber im Folgenden anhand eines Pulsmittelungsverfahrens, welches gerade bei gestörten Umgebungsbedingungen mit deutlich kleineren Pulsenergien auskommt und dennoch hochgenaue Messungen ermöglicht. Das Pulsmittelungsverfahren an sich ist für eindimensionale Entfernungstaster aus der DE 10 2007 013 714 bekannt, und hierauf wird für ergänzende Erklärungen verwiesen.

Figur 3 zeigt in einem Blockschaltbild den Sende- und Empfangspfad des Laserscanners 10. Bis auf den Lichtsender 12 und den Lichtempfänger 24 sind die in Figur 3 gezeigten Elemente in der Figur 1 pauschal als Auswertungseinheit 30 bezeichnet.

Ein großer Teil der Auswertungseinheit 30 ist auf einem digitalen Baustein 38 implementiert, beispielsweise einem FPGA (Field Programmable Gate Array). Auf einem Sendepfad veranlasst der FPGA 38, der zugleich als Steuerungseinheit des Laserscanners 10 fungiert, über eine Sendeansteuerung 40 und eine Treiberschaltung 42 den Lichtsender 12 zum Aussenden von Einzellichtpulsen. Die Sendeansteuerung ist in der Lage, Sendepulse auf einem sehr feinen Zeitraster zu verzögern und so zu wohldefinierten Zeitpunkten auszusenden.

Das remittierte Licht wird von dem Lichtempfänger 24 in ein Empfangssignal gewandelt. Dieses Empfangssignal wird zunächst analog aufgeteilt und vorverarbeitet. Ein Splitterelement 44, beispielsweise eine Frequenzweiche, teilt dazu das analoge Empfangsignal noch vor der A/D-Wandlung auf zwei Teilempfangspfade mit getrennten Frequenzbereichen. Die Filterfrequenz beträgt beispielsweise 100MHz. Andere Filterfrequenzen, etwa von bis zu 250MHz, sind denkbar.

Der höherfrequente Anteil enthält die Empfangspulse von harten Zielen und wird auf einem ersten analogen Teilempfangspfad über einen Vorverstärker und einen Begrenzerverstärker 46 einem ersten A/D-Wandler 48 zugeführt. Das Nebelsignal ist in dem ersten Teilempfangspfad aufgrund der Filtereigenschaften des Splitterelements 44 und der verhältnismäßig breiten Signalform des Nebelsignals nahezu vollständig unterdrückt.

Der niederfrequente Anteil enthält umgekehrt das Nebelsignal von weichen Zielen und wird auf einem zweiten analogen Teilempfangspfad über einen Verstärker 50 einem zweiten A/D-Wandler 52 zugeführt. Dabei kann wegen der vergleichsweise langsamen Änderungen des Nebelsignals die Abtastfrequenz des zweiten A/D-Wandlers 52 geringer gewählt werden als die Abtastfrequenz des ersten A/D-Wandlers 48, um den Hardwareaufwand in dem FPGA 38 gering zu halten.

Die Bewertung der beiden Teilempfangssignale in dem FPGA 38 erfolgt jeweils nach einer Histogrammbildung über eine Vielzahl von Ereignissen, also Zeitabschnitten, die auf einen Sendepuls folgen. In dem ersten Teilempfangspfad erfolgt dabei eine Bestimmung der zeitlichen Lage des Empfangspulses.

Dazu zeigt Figur 4 eine schematische Darstellung der Signale in verschiedenen Verarbeitungsstufen der Vorverarbeitung und Auswertung des ersten Teilempfangspfades. Der Lichtsender 12 erzeugt in jeder Messperiode 100 jeweils einen Sendepuls, der die Bestimmung eines präzisen Zeitpunkts ermöglicht. Dafür eignet sich ein Rechteckpuls, es sind aber auch andere Pulse vorstellbar, wie beispielsweise Gausspulse. Der Einzellichtpuls wird in dem Überwachungsbereich 18 reflektiert oder remittiert und dann in dem Lichtempfänger 24 in einen elektrischen Empfangspuls 102 umgewandelt. Der Empfangspuls 102 ist idealisiert dargestellt, unter realistischen Bedingungen kämen Rauschanteile und Formverzerrungen hinzu.

Der Empfangspuls 102 ist aufgrund der Natur des Lichtes immer ein unipolares Signal. Das Splitterelement 44 ist zugleich als Filter ausgebildet, beispielsweise als Bandpassfilter. Die Filtereigenschaften sorgen zum einen für die frequenzabhängige Aufteilung in die beiden Teilempfangspfade. In einer Doppelfunktion erzeugt das Splitterelement 44 aufgrund seiner Filtereigenschaften zugleich aus dem unipolaren Empfangspuls 102 ein bipolares Signal 104, von dem nur die beiden ersten Schwingungen gezeigt sind. Neben dem eigentlichen bipolaren Signal 104 symbolisieren graue Rechtecke einen Rauschpegel. In dem Begrenzungsverstärker 46 wird das bipolare Signal 104 bis in die Sättigung hinein verstärkt und abgeschnitten, so dass das eigentliche Signal zu einer Rechteckflanke 106 und der durch graue Rechtecke dargestellte Rauschpegel in seiner Amplitude über den gesamten Dynamikbereich gedehnt wird.

Die Rechteckflanke 106 wird in dem insbesondere als Binarisierer ausgebildeten ersten A/D-Wandler 48 abgetastet. Jeder Stützpunkt der Abtastung wird durch einen Pfeil 108 symbolisiert. Die entstehende Bitfolge wird in dem FPGA 38 verwendet, um ein Histogramm 110 zu bilden. Dafür ist für jedes Bin ein Akkumulator vorgesehen, der nur bei einem zugehörigen Bitwert "1" heraufgezählt wird. Bei idealen, unverrauschten Signalen würde in diesem Histogramm nur dasjenige Bin gefüllt, über dem die Rechtflanke 106 liegt. Der von dem Begrenzungsverstärker 46 angehobene Rauschpegel füllt aber auch die übrigen Bins, und zwar wegen der Zufälligkeit des Rauschens im Erwartungswert etwa in jeder zweiten Messperiode 100.

Wird das soeben beschriebene Verfahren iteriert und das Histogramm 110 über n Messperioden 100 gebildet, so sind die Bins durch das Rauschen ungefähr mit dem Wert n/2 gefüllt, wobei statistische Schwankungen hinzukommen. Dieser Wert n/2 entspricht aufgrund der Binarisierung dem Signalwert Null. Daraus erhebt sich nach oben das durch den positiven Teil des bipolaren Signals 104 gebildete Maximum und nach unten das entsprechende Minimum heraus. Den dazwischenliegenden Nulldurchgang detektiert anschließend das FPGA 38. Dazu wird beispielsweise das Histogramm mit dem erwarteten Verlauf des bipolaren Signals korreliert. Dies führt direkt oder mit einer optionalen zusätzlichen Regression zu einem Empfangszeitpunkt, dessen Differenz zu dem bekannten Sendezeitpunkt die Lichtlaufzeit bestimmt. Der Empfangszeitpunkt kann noch durch eine Pegelinformation korrigiert werden, die als Summe über das Histogramm gewonnen wird.

Durch die statistische Auswertung einer Vielzahl von Einzelmessungen wird das Signal-Rausch-Verhältnis so weit angehoben, dass auch bei gestörten Umgebungsbedingungen robuste Entfernungsmessungen möglich sind. Dies gilt auch dann, wenn ein einzelner verstärkter Empfangspuls 102 so stark verrauscht ist, dass keinerlei Unterschiede zwischen Nutzsignal und Rauschen erkennbar sind.

Figur 4 zeigt nur einen relevanten Ausschnitt der Messperiode 100 um den Empfangszeitpunkt herum. Um Speicher zu sparen, kann dieser Zeitbereich vorab festgelegt oder gesucht und das Histogramm 110 nur für einen Teil der Messperiode 100 gebildet werden.

Durch die Drehbewegung der Ablenkeinheit 16 erhält jeder Sendepuls einen eigenen Winkelversatz. Das Pulsmittelungsverfahren unterstützt eine Austauschbeziehung zwischen Scanfrequenz, Winkelauflösung, Reichweite und Wiederholfrequenz der Sendepulse. Diese hängen über die Statistik- oder Mittelungstiefe miteinander zusammen, also die Anzahl an Empfangspulsen 102, die jeweils in einem Histogramm 110 für einen Messwert zusammengefasst werden. Es ist also beispielsweise möglich, eine höhere Winkelauflösung auf Kosten der Reichweite zu erhalten und umgekehrt.

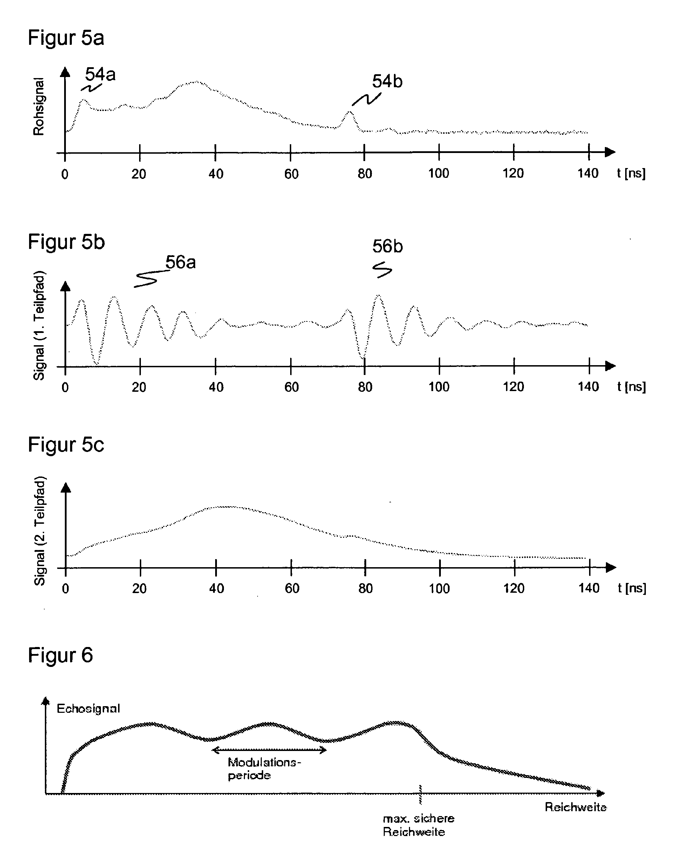

Figur 5 zeigt Empfangssignale in den unterschiedlichen Empfangspfaden. Diese Empfangssignale sind weitgehend unverrauscht und daher idealisiert. Es würde sich aber ein sehr ähnlicher Signalverlauf nach Histogrammbildung über eine hinreichende Anzahl von Ereignissen herausbilden.

Figur 5a ist ein Rohsignal direkt nach dem Lichtempfänger 24. Es enthält noch alle Frequenzanteile und entspricht dem Signal der Figur 2c. Dabei sind die Empfangspulse 54a-b von zwei harten Zielen mit dem Nebelsignal überlagert. Der erste Empfangspuls 54a gehört zu einem Störobjekt, wie einer Schneeflocke, und der zweite Empfangspuls 54b ist das eigentliche Messsignal.

Figur 5b zeigt das erste Teilempfangssignal mit den höheren Frequenzanteilen hinter dem Splitterelement 44. Dabei ist der erste Teilempfangspfad beispielhaft auf 100MHz ausgelegt. Aufgrund der Filtereigenschaften des Splitterelements 44 ist zum einen das Nebelsignal unterdrückt. Außerdem sind die beiden unipolaren Empfangspulse des in Figur 5a gezeigten Gesamtsignals in zwei gut auswertbare bipolare Signale 56a-b mit einer Reihe von Nachschwingungen umgewandelt. In beiden bipolaren Signalen kann der erste Nulldurchgang oder ein späterer Nulldurchgang herangezogen werden, um die zeitliche Lage des Empfangspulses hochpräzise zu bestimmen.

Figur 5c zeigt das zweite Teilempfangssignal mit den niederen Frequenzanteilen. Hier ist der zweite Teilempfangspfad beispielhaft auf 10MHz ausgelegt. Das Nebelsignal, welches erwartungsgemäß die Faltung der Pulsform eines Sendepulses mit der Signaldynamik sein sollte, ist deutlich erkennbar und auswertbar.

Aus dem Nebelsignal, welches beispielhaft in Figur 5c gezeigt ist, kann das FPGA 38 eine Reihe von Erkenntnissen gewinnen. Zunächst kann die Fläche unter dem Nebelsignal aufintegriert werden. Dies ist in einem Histogramm leicht durch Summenbildung möglich. Dies ergibt eine Pegelmessung, mit der zunächst bewertet werden kann, ob überhaupt eine Sichttrübung besteht. Die Pegelmessung liefert aber zugleich ein Maß für die aufgrund der Sichttrübung reflektierte Energie und damit für die dadurch verursachte Sichtweitenreduktion. Aus dieser quantitativen Beurteilung der Sichttrübung lassen sich weitere Maßnahmen ableiten, etwa eine Prüfung, ob ein sicherer Einsatz trotz der reduzierten Sichtweite noch möglich ist, eine Geschwindigkeitsreduktion von Fahrzeugen, ein zusätzlicher Sicherheitsaufschlag auf Schutzfelder und dergleichen.

Das Nebelsignal enthält aber nicht nur die summarische Pegelinformation, sondern kann auch ortsaufgelöst ausgewertet werden, indem einzelne oder Gruppen von Bins des Histogramms betrachtet werden. Damit kann die Sichttrübung abstandsabhängig klassifiziert werden. Sofern die erforderliche Rechenleistung bereitgestellt wird, können noch weitere, komplexere Mustererkennungsverfahren angewandt werden, um das Nebelsignal genauer zu untersuchen.

Je nach Stärke der Sichttrübung, also beispielsweise Dichte des Nebels, genügt möglicherweise eine Mittelung über ein kleines Winkelsegment nicht, um ein für die Auswertung ausreichend starkes Nebelsignal zu erzeugen. Denn während für die eigentliche Objekterfassung in dem ersten Teilempfangspfad durch die Sendepulse relativ hohe lokale Energiedichten auftreten, verteilt sich diese Energie im Nebelsignal diffus. Somit ist denkbar, die Statistiktiefe in dem ersten Teilempfangspfad und dem zweiten Teilempfangspfad unterschiedlich zu wählen. Für die Messung von Objektabständen mit dem ersten Teilempfangssignal werden in dieser Ausführungsform Ereignisse über einen relativ kleinen Winkelbereich gesammelt, beispielsweise 0,5° oder 1°, mit entsprechend hoher Winkelauflösung für die Objektpositionen. Für die Erfassung des Nebelsignals wird dagegen ein Histogramm mit einer höheren Anzahl von Ereignissen aus einem größeren Winkelbereich beispielsweise von mindestens 10° gebildet. Dies basiert auf der in der Regel zutreffenden Annahme, dass sich die Sichttrübung bei kleinen Winkelschritten nicht wesentlich verändert.

Da das Nebelsignal häufig verhältnismäßig schwach ausgeprägt ist, kann es schwierig sein, es von sonstigen Störquellen und Rauschen zu unterscheiden. Deshalb wäre es vorteilhaft, wenn das Nebelsignal charakteristische Eigenschaften mitbrächte, an denen sowohl identifiziert als auch in den zweiten Teilempfangspfad separiert werden kann. Nun ist, wie mehrfach erläutert, das Nebelsignal die Faltung aus der Sendepulsform und der Signaldynamik. Somit kann durch gezielte Veränderung der Signaldynamik dem Nebelsignal die gewünschte charakteristische Eigenschaft aufgeprägt werden.

Figur 6 zeigt eine entsprechende beispielhafte Signaldynamik. Hierbei wird die abstandsabhängige Signaldynamik derart räumlich moduliert, dass das Nebelsignal schon durch den oder die charakteristischen Frequenzbereiche der Modulation abgetrennt und erkannt werden kann. Die Modulationsfrequenz sollte dabei außerhalb der Frequenzanteile der Empfangspulse liegen. In dem Beispiel der Figur 6, welches im Maßstab mit den Figuren 2 und 5 vergleichbar ist, wurde eine Modulation mit kleiner Amplitude und einer Ortsfrequenz von 2m aufgeprägt. Eine solche Modulation beeinflusst die Pulsform der Empfangspulse eines harten Ziels so gut wie nicht, weil die Empfangsdynamik aus Sicht der kurzen Empfangspulse quasikonstant ist. Damit wird der Empfangspuls lediglich leicht skaliert, je nachdem, bei welcher Reichweite sich das erzeugende harte Ziel befindet.

Vorteilhaft ist eine Modulationsperiode, die maximal halb so lang ist wie die Roundtrip-Zeit für die maximale sichere Reichweite. Dabei bedeutet sichere Reichweite diejenige, bis zu welcher der Laserscanner 10 zuverlässige Messwerte liefert. Die sichere Reichweite ist deshalb stets kleiner als die eigentliche Reichweite.

Der Ansatz mit einer Modulation der Signaldynamik beruht darauf, dass sich das Nebelsignal aus Echoanteilen zahlreicher diffuser Streuzentren in verschiedenen Reichweiten zusammensetzt. Somit wird das Nebelsignal wie die Signaldynamik moduliert und kann allein aufgrund der Modulationsfrequenz erkannt werden. Abweichend von dem Blockschaltbild der Figur 3 erfordert dies nicht einmal eine A/D-Wandlung und Histogrammbildung in dem zweiten Teilempfangspfad. Die Stärke der Sichttrübung kann bei modulierter Signaldynamik direkt über die Amplitude der detektierten Modulationsschwingung des Nebelsignals im zweiten Teilempfangspfad bestimmt werden.

## Patentansprüche

1. Optoelektronischer Sensor (10) zur Erfassung und Abstandsbestimmung von Objekten in einem Überwachungsbereich (18), mit einem Lichtsender (12) zum Aussenden eines Sendelichtstrahls (14), der einzelne Lichtimpulse aufweist, einem Lichtempfänger (24) zum Erzeugen eines Empfangssignals aus von Objekten in dem Überwachungsbereich (18) remittiertem oder reflektiertem Sendelicht (20) sowie mit einer Auswertungseinheit (30), die dafür ausgebildet ist, aus der Lichtlaufzeit zwischen Aussenden des Sendelichtstrahls (14) und Empfang von Sendelicht (20) einen Objektabstand zu bestimmen,
**dadurch gekennzeichnet,**
**dass** ein Empfangspfad zwischen Lichtempfänger (24) und Auswertungseinheit (30) an einem Splitterelement (44) in einen ersten Teilempfangspfad (46, 48) und einen zweiten Teilempfangspfad (50, 52) aufgeteilt ist, dass das Splitterelement (44) Filtereigenschaften aufweist, um höherfrequente Anteile des Empfangssignals als erstes Teilempfangssignal auf dem ersten Teilempfangspfad (46, 48) und niederfrequente Anteile des Empfangssignals als zweites Teilempfangssignal auf dem zweiten Teilempfangspfad (50, 52) weiterzulein, so dass die höherfrequenten Anteile die Empfangspulse von harten Zielen, welche ein kurzes Signalecho erzeugen, und die niederfrequenten Anteile ein als Nebelsignal bezeichnetes, von weichen Zielen, welche ein breites Signalecho erzeugen und von Medien mit einer großen Anzahl kleiner Partikel gebildet werden, erzeugtes Empfangssignal enthalten, und dass die Auswertungseinheit (30) dafür ausgebildet ist, aus dem ersten Teilempfangssignal die Anwesenheit von Objekten in dem Überwachungsbereich (18) und deren Objektabstand und aus dem zweiten Teilempfangssignal ein Maß für die durch weiche Ziele bewirkte Sichttrübung zu bestimmen.

2. Sensor (10) nach Anspruch 1,
wobei der Sendelichtstrahl (14) eine Vielzahl aufeinanderfolgender Einzellichtpulse aufweist, und wobei die Auswertungseinheit (30) dafür ausgebildet ist, eine Vielzahl von Empfangspulsen (102) in dem ersten Teilempfangssignal in einem zeitlichen Histogramm (110) zu sammeln und den Objektabstand aus dem Histogramm (110) zu bestimmen und/oder eine Vielzahl von Abschnitten des zweiten Teilempfangssignals, die auf einen ausgesandten Einzellichtpuls folgen, in einem zeitlichen Histogramm zu sammeln und aus dem Histogramm ein Maß für die Sichttrübung zu bestimmen.

3. Sensor (10) nach Anspruch 1 oder 2,
der als Laserscanner ausgebildet ist, indem der Sensor eine bewegliche Ablenkeinheit (16) zur periodischen Ablenkung des Sendelichtstrahls (14) in den Überwachungsbereich (18) und eine Winkelmesseinheit (28) zur Erzeugung von Winkelpositionssignalen in Abhängigkeit von einer Winkelstellung der Ablenkeinheit (16) aufweist, wobei insbesondere die Auswertungseinheit (30) dafür ausgebildet ist, jeweils anhand des Winkelpositionssignals eine Gruppe von Empfangspulsen (102) auszuwählen, die in einem Histogramm (110) gesammelt wird, und den aus dem Histogramm (110) der Gruppe bestimmten Objektabstand einem durch das Winkelpositionssignal bezeichneten Erfassungswinkel zuzuordnen.

4. Sensor (10) nach Anspruch 3,
wobei die Auswertungseinheit (30) dafür ausgebildet ist, für den ersten Teilempfangspfad (46, 48) Gruppen zu einer hohen Winkelauflösung, insbesondere von höchstens 2°, und/oder für den zweiten Teilempfangspfad (50, 52) Gruppen zu einer geringeren Winkelauflösung, insbesondere von mindestens 3°, zu bilden.

5. Sensor (10) nach einem der vorhergehenden Ansprüche,
wobei in dem ersten Teilempfangspfad (46, 48) ein analoger Vorverarbeiter (44, 46) vorgesehen ist, der ein Filterelement (44) aufweist, um jeweils den Empfangspuls (102) zu einem bipolaren vorverarbeiteten Signal (104) umzuwandeln und über einen A/D-Wandler (48) der Auswertungseinheit (30, 38) zuzuführen, wobei insbesondere der analoge Vorverarbeiter (44, 46) einen Begrenzungsverstärker (46) zur Verstärkung des positiven bzw. negativen Anteils des Signals (104) bis auf einen Sättigungswert aufweist und der A/D-Wandler (48) ein Binarisierer ist.

6. Sensor (10) nach Anspruch 5,
wobei das Splitterelement (44) zugleich als das Filterelement (44) ausgebildet ist.

7. Sensor (10) nach einem der vorhergehenden Ansprüche,
wobei in dem ersten Teilempfangspfad (46, 48) ein erster A/D-Wandler (48) und in dem zweiten Teilempfangspfad (50, 52) ein zweiter A/D-Wandler (52) vorgesehen ist, und wobei insbesondere die Abtastfrequenz des zweiten A/D-Wandlers (52) geringer ist als die Abtastfrequenz des ersten A/D-Wandlers (48).

8. Sensor (10) nach einem der vorhergehenden Ansprüche,
wobei die Auswertungseinheit (30, 38) dafür ausgebildet ist, das zweite Teilempfangssignal aufzuintegrieren, insbesondere als Summe über das Histogramm, um anhand der so erhaltenen Pegelinformation das Maß der Sichttrübung zu bestimmen.

9. Sensor (10) nach einem der vorhergehenden Ansprüche,
wobei eine dem Lichtempfänger (24) vorgeordnete Empfangsoptik (34, 16, 22) mittels Optikdesign derart ausgebildet ist, dass das Empfangssignal eine periodisch modulierte Intensitätscharakteristik in Abhängigkeit von dem Objektabstand mit einer Periodenlänge aufweist, die groß gegen die Dauer eines Sendepulses ist und höchstens der halben maximalen Reichweite des Sensors (10) entspricht.

10. Sensor (10) nach Anspruch 9 ,
wobei die Auswertungseinheit (30, 38) dafür ausgebildet ist, eine Sichttrübung anhand einer Korrelation des zweiten Teilempfangssignals mit der bekannten modulierten Intensitätscharakteristik zu erkennen.

11. Sensor (10) nach einem der vorhergehenden Ansprüche,
wobei der Sensor (10) als sicherer Laserscanner ausgebildet ist, der einen sicheren Ausgang (36) aufweist und dessen Auswertungseinheit (30) dafür ausgebildet ist, bei Erkennen eines unzulässigen Eingriffs in ein vorgebbares Schutzfeld innerhalb des Überwachungsbereichs (18) ein Abschaltsignal über den sicheren Ausgang (36) auszugeben.

12. Verfahren zur Erfassung und Abstandsbestimmung von Objekten in einem Überwachungsbereich (18), wobei ein Sendelichtstrahl (14) ausgesandt wird, der einzelne Lichtimpulse aufweist, und remittierte oder reflektierte Anteile (20) des Sendelichtstrahls erfasst und in ein Empfangssignal umgewandelt werden, und wobei aus der Lichtlaufzeit zwischen Aussenden des Sendelichtstrahls (14) und Empfang von Sendelicht (20) ein Objektabstand bestimmt wird, **dadurch gekennzeichnet,**
**dass** das Empfangssignal an einem Splitterelement (44) anhand von Frequenzeigenschaften in ein erstes Teilempfangssignal auf einem ersten Teilempfangspfad (46, 48) und ein zweites Teilempfangssignal auf einem zweiten Teilempfangspfad (50, 52) aufgeteilt wird, so dass das erste Teilempfangssignal die Empfangspulse von harten Zielen, welche ein kurzes Signalecho erzeugen, und das zweite Teilempfangssignal ein als Nebelsignal bezeichnetes, von weichen Zielen, welche ein breites Signalecho erzeugen und von Medien mit einer großen Anzahl kleiner Partikel gebildet werden, erzeugtes Empfangssignal enthält, wobei aus dem ersten Teilempfangssignal die Anwesenheit von Objekten in dem Überwachungsbereich (18) und deren Objektabstand und aus dem zweiten Teilempfangssignal ein Maß für die durch weiche Ziele bewirkte Sichttrübung bestimmt wird.

13. Verfahren nach Anspruch 12,
wobei der Sendelichtstrahl (14) eine Vielzahl aufeinanderfolgender Einzellichtpulse aufweist, und wobei eine Vielzahl von Empfangspulsen in dem ersten Teilempfangssignal in einem zeitlichen Histogramm (110) gesammelt und der Objektabstand aus dem Histogramm (110) bestimmt wird und/oder eine Vielzahl von Abschnitten des zweiten Teilempfangssignals, die auf jeweils einen ausgesandten Einzellichtpuls folgen, in einem zeitlichen Histogramm gesammelt und aus dem Histogramm ein Maß für die Sichttrübung bestimmt wird, insbesondere aus einer Pegelinformation, die aus einer Summe über das Histogramm gewonnen wird.

14. Verfahren nach Anspruch 12 oder 13,
wobei der Überwachungsbereich (18) abgetastet wird, indem der Sendelichtstrahl (14) an einer beweglichen Ablenkeinheit (16) periodisch in den Überwachungsbereich (18) abgelenkt wird, und wobei insbesondere ein Winkelpositionssignal in Abhängigkeit von einer Winkelstellung der Ablenkeinheit (16) erzeugt und anhand des Winkelpositionssignals eine Gruppe von Empfangspulsen ausgewählt wird, die in einem Histogramm (110) gesammelt wird, und wobei der aus dem Histogramm (110) der Gruppe bestimmte Objektabstand einem durch das Winkelpositionssignal bezeichneten Erfassungswinkel zugeordnet wird.

15. Verfahren nach einem der Ansprüche 12 bis 14,
wobei eine Empfangsoptik (34, 16, 22) aufgrund ihres Optikdesigns dem Empfangssignal eine periodisch modulierte Intensitätscharakteristik in Abhängigkeit von dem Objektabstand mit einer Periodenlänge aufprägt, die groß gegen die Dauer eines Sendepulses ist und höchstens einer halben maximalen Reichweite entspricht, und wobei eine Sichttrübung anhand einer Korrelation des zweiten Teilempfangssignals mit der bekannten modulierten Intensitätscharakteristik erkannt wird.

## Claims

1. An optoelectronic sensor (10) for the detection and distance determination of objects in a monitored area (18), the sensor (10) having a light transmitter (12) for transmitting a transmission light beam (14) comprising individual light pulses, a light receiver (24) for generating a reception signal from remitted transmission light (20) remitted or reflected from objects in the monitored area (18), and an evaluation unit (30) configured to determine an object distance from the light time of flight between transmission of the transmission beam (14) and reception of remitted transmission light (20),
**characterized in that**
a reception path between light receiver (24) and evaluation unit (30) is divided into a first partial reception path (46, 48) and a second partial reception path (50, 52) at a splitter element (44), **in that** the splitter element (44) comprises filtering properties to pass higher frequency parts of the reception signal as a first partial reception signal on to the first partial reception path (46, 48) and lower frequency parts of the reception signal as a second partial reception signal on to the second partial reception path (50, 52) so that the higher frequency parts include the reception pulses from hard targets generating a short signal echo and the lower frequency parts include a reception signal referred to as a fog signal which is generated by soft targets which generate a broad signal echo and are formed by media with a large number of small particles, and **in that** the evaluation unit (30) is configured to determine a presence of objects in the monitored area (18) and the object's distance from the first partial reception signal and a measure for the opacity caused by soft targets from the second partial reception signal.

2. The sensor (10) according to claim 1,
wherein the transmission light beam (14) comprises a plurality of successive individual light pulses, and wherein the evaluation unit (30) is configured to accumulate a plurality of reception pulses (102) of the first partial reception signal in a time histogram (110) and to determine the object distance from the histogram (110) and/or to accumulate a plurality of sections of the second partial reception signal following a transmitted individual light pulse in a time histogram and to determine a measure for the opacity from the histogram.

3. The sensor (10) according to claim 1 or 2,
being configured as a laser scanner in that the sensor comprises a movable deflection unit (16) for periodically deflecting the transmission light beam (14) in the monitored area (18) and an angle encoder (28) for generating angle position signals in dependence on an angular position of the deflection unit (16), wherein in particular the evaluation unit (30) is configured to select a respective group of reception pulses (102) to be accumulated in a histogram (110) based on the angular position signal and to assign the object distance determined from the histogram (110) of the group to a detection angle given by the angle position signal.

4. The sensor (10) according to claim 3,
wherein the evaluation unit (30) is configured to form groups of high angular resolution, in particular of at most 2°, for the first partial reception path (46, 48) and groups of a lesser angular resolution, in particular of at least 3°, for the second partial reception path (50, 52).

5. The sensor (10) according to any of the preceding claims,
wherein an analog preprocessor (44, 46) is provided in the first partial reception path (46, 48) comprising a filter element (44) to convert a respective reception pulse (102) into a bipolar preprocessed signal (104) and pass it on to the evaluation unit (30, 38) via an A/D converter (48), wherein in particular the analog preprocessor (44, 46) comprises a limiting amplifier (46) for amplifying the positive and negative parts of the signal (104) to a saturation value, and wherein the A/D converter (48) is a binarizer.

6. The sensor (10) according to claim 5,
wherein the splitter element (44) is also the filter element (44).

7. The sensor (10) according to any of the preceding claims,
wherein a first A/D converter (48) is provided in the first partial reception path (46, 48) and a second A/D converter (52) is provided in the second partial reception path (50, 52), and wherein in particular a sampling frequency of the second A/D converter (52) is lower than a sampling frequency of the first A/D converter (48).

8. The sensor (10) according to any of the preceding claims,
wherein the evaluation unit (30, 38) is configured to integrate the second partial reception signal, in particular as a sum over the histogram, to determine the measure for the opacity from the level information obtained by the integration.

9. The sensor (10) according to any of the preceding claims,
wherein reception optics (34, 16, 22) arranged in front of the light receiver (24) are made by optical design such that the reception signal comprises intensity characteristics in dependence on the objects distance which are periodically modulated with a period that is large as compared to the duration of a transmission pulse and corresponds to at most half the range of the sensor (10).

10. The sensor (10) according to claim 9,
wherein the evaluation unit (30) is configured to detect an opacity based on a correlation of the second partial reception signal and the known modulated intensity characteristic.

11. The sensor (10) according to any of the preceding claims,
the sensor (10) being configured as a safety laser scanner comprising a safe output (36) and whose evaluation unit (30) is configured to output a shutdown signal via the safe output (36) upon detection of a forbidden intrusion into a predefined protection area within the monitored area (18).

12. A method for the detection and distance determination of objects in a monitored area (18), wherein a transmission light beam (14) comprising individual light pulses is transmitted and remitted or reflected parts (20) of the transmission light beam (14) are detected and converted into a reception signal, and wherein an object distance is determined from the light time of flight between transmission of the transmission light beam (14) and reception of remitted transmission light (20),
**characterized in that**
the reception signal is divided into a first partial reception signal on a first partial reception path (46, 48) and a second partial reception signal on a second partial reception path (50, 52) at a splitter element (44) based on frequency properties so that the first partial reception signal includes the reception pulses from hard targets generating a short signal echo and the second partial reception signal includes a reception signal referred to as a fog signal which is generated by soft targets which generate a broad signal echo and are formed by media with a large number of small particles, wherein the presence of objects in the monitored area (18) and the object's distance is determined from the first partial reception signal and a measure for the opacity caused by soft targets is determined from the second partial reception signal.

13. The method according to claim 12,
wherein the transmission light beam (14) comprises a plurality of successive individual light pulses, and wherein a plurality of reception pulses of the first partial reception signal are accumulated in a time histogram (110) and the object distance is determined from the histogram (110) and/or a plurality of sections of the second partial reception signal following a respective transmitted individual light pulse are accumulated in a time histogram and a measure for the opacity is determined from the histogram, in particular from a level information obtained from a sum over the histogram.

14. The method according to claim 12 or 13,
wherein the monitored area (18) is scanned in that the transmission light beam (14) is periodically deflected in the monitored area (18) by a movable deflection unit (16), and wherein in particular an angle position signal is generated in dependence on an angular position of the deflection unit (16) and a group of reception pulses is selected based on the angular position signal, the group being gathered in a histogram (110), and wherein an object distance determined from the histogram (110) of the group is assigned to a detection angle given by the angle position signal.

15. The method according to any of claims 12 to 14,
wherein reception optics (34, 16, 22), by its optical design, shape intensity characteristics of the reception signal in dependence on the object distance with a periodic modulation having a period which is large as compared to the duration of a transmission pulse and corresponds to at most half a maximal range of detection, and wherein an opacity is detected based on a correlation of the second partial reception signal and the known modulated intensity characteristic.

## Revendications

1. Capteur optoélectronique (10) pour la détection et la détermination de distance d'objet dans une zone de surveillance (18), comprenant un émetteur de lumière (12) pour émettre un rayon de lumière émise (14), qui comprend des impulsions de lumières individuelles, un récepteur de lumière (24) pour générer un signal de réception à partir de la lumière émise (20) réémise ou réfléchie par des objets dans la zone de surveillance (18), et une unité d'évaluation (30) qui est réalisée pour déterminer une distance vis-à-vis d'un objet à partir du temps de parcours de la lumière entre l'émission du rayon de lumière émise (14) et la réception de la lumière émise (20),
**caractérisé en ce que**
un trajet de réception entre le récepteur de lumière (24) et l'unité d'évaluation (30) est subdivisée au niveau d'un élément séparateur (44) en un premier trajet de réception partiel (46, 48) et en un second trajet de réception partiel (50, 52), **en ce que** l'élément séparateur (44) présente des propriétés de filtrage afin de laisser passer des parts à haute fréquence du signal de réception à titre de premier signal de réception partiel vers le premier trajet de réception partiel (46, 48) et des parts à basse fréquence du signal de réception à titre de second signal de réception partiel vers le second trajet de réception partiel (50, 52), de sorte que les parts à haute fréquence contiennent les impulsions de réception provenant de cibles dures, qui engendrent un écho de signal court, et les parts à basse fréquence contiennent un signal de réception, désigné comme signal de "brouillard", engendré par des cibles molles, qui engendrent un écho de signal large et sont formées par des milieux avec un grand nombre de petites particules, et **en ce que** l'unité d'évaluation (30) est réalisée pour déterminer la présence d'objets dans la zone de surveillance (18) et leur distance à partir du premier signal de réception partiel, et pour déterminer à partir du second signal de réception partiel une mesure pour le trouble de visibilité provoqué par des cibles molles.

2. Capteur (10) selon la revendication 1, dans lequel le rayon de lumière émise (14) comprendre une pluralité d'impulsions de lumière individuelles mutuellement successives, et dans lequel l'unité d'évaluation (30) est réalisée pour rassembler dans un histogramme temporel (110) une pluralité d'impulsions de réception (102) dans le premier signal de réception partiel, et pour déterminer la distance à l'objet à partir de l'histogramme (110), et/ou pour rassembler dans un histogramme temporel une pluralité de portions du second signal de réception partiel qui suivent une impulsion de lumière individuelle émise, et pour déterminer à partir de l'histogramme une mesure pour le trouble de visibilité.

3. Capteur (10) selon la revendication 1 ou 2,
qui est réalisé sous forme de scanner à laser, dans lequel le capteur comprend une unité de déflexion mobile (16) pour défléchir périodiquement le rayon de lumière émise (14) vers la zone de surveillance (18), et une unité de mesure angulaire (28) pour engendrer des signaux de position angulaire en fonction d'une situation angulaire de l'unité de déflexion (16), ladite unité d'évaluation (30) étant en particulier réalisée pour sélectionner respectivement au moyen du signal de position angulaire un groupe d'impulsions de réception (102) qui sont rassemblées dans un histogramme (110), et pour associer la distance-objet déterminée à partir de l'histogramme (110) du groupe à un angle de détection désigné par le signal de position angulaire.

4. Capteur (10) selon la revendication 3,
dans lequel l'unité d'évaluation (30) est réalisée pour former, pour le premier trajet de réception partiel (46, 48), des groupes avec une résolution angulaire élevée, en particulier au maximum de 2°, et/ou pour former, pour le second trajet de réception partiel (50, 52), des groupes avec une résolution angulaire faible, en particulier au minimum de 3°.

5. Capteur (10) selon l'une des revendications précédentes,
dans lequel dans le premier trajet de réception partiel (46, 48) il est prévu un circuit de prétraitement analogique (44, 46), qui comporte un élément de filtrage (44) afin de convertir respectivement l'impulsion de réception (102) en un signal prétraité bipolaire (104), et l'admettre à l'unité d'évaluation (30, 38) via un convertisseur analogique/numérique (38), et le circuit de prétraitement analogique (44, 46) comprend en particulier un amplificateur-limiteur (46) pour amplifier la part positive ou négative du signal (104) jusqu'à une valeur de saturation, et le convertisseur analogique/numérique (48) effectue une conversion binaire.

6. Capteur (10) selon la revendication 5,
dans lequel l'élément séparateur (44) est réalisé simultanément comme l'élément de filtrage (44).

7. Capteur (10) selon l'une des revendications précédentes,
dans lequel il est prévu un premier convertisseur analogique/numérique (48) dans le premier trajet de réception partiel (46, 48) et un second convertisseur analogique/numérique (52) dans le second trajet de réception partiel (50, 52), et la fréquence de palpage du second convertisseur analogique/numérique (52) est en particulier plus faible que la fréquence de palpage du premier convertisseur analogique/numérique (48)

8. Capteur (10) selon l'une des revendications précédentes,
dans lequel l'unité d'évaluation (30, 38) est réalisée pour intégrer le second signal de réception partiel, en particulier à titre de somme via l'histogramme, afin de déterminer à partir de l'information de niveau ainsi obtenue la mesure du trouble de visibilité.

9. Capteur (10) selon l'une des revendications précédentes,
dans lequel une optique de réception (34, 16, 22) agencée devant le récepteur de lumière (24) est réalisée, au moyen d'une conception optique, de telle façon que le signal de réception présente une caractéristique d'intensité à modulation périodique en fonction de la distance à l'objet, avec une longueur de période qui est importante par rapport à la durée d'une impulsion d'émission, et qui correspond au maximum à la moitié de la portée maximale du capteur (10).

10. Capteur (10) selon la revendication 9,
dans lequel l'unité d'évaluation (30, 38) est réalisée pour reconnaître un trouble de visibilité au moyen d'une corrélation du second signal de réception partiel avec la caractéristique d'intensité modulée connue.

11. Capteur (10) selon l'une des revendications précédentes,
dans lequel le capteur (10) est réalisé sous forme de scanner à laser de sécurité, qui comprend une sortie de sécurité (36), et dont l'unité d'évaluation (30) est réalisée pour, lors de la reconnaissance d'une intervention inadmissible dans un champ protégé prédéterminé à l'intérieur de la zone de surveillance (18), délivrer un signal de coupure via la sortie de sécurité (36).

12. Procédé pour la détection et la détermination de distance d'objets dans une zone de surveillance (18), dans lequel un rayon de lumière émise (14) est émis, qui comprend des impulsions de lumière individuelles, et les parts réémises ou réfléchies (20) du rayon de lumière émise sont détectées et converties dans un signal de réception, et dans lequel on détermine à partir du temps de parcours de la lumière entre l'émission du rayon de lumière émise (14) et la réception de la lumière émise (20), une distance à l'objet,
**caractérisé en ce que**
le signal de réception est subdivisé au niveau d'un élément séparateur (44) au moyen de propriétés relatives à la fréquence en un premier signal de réception partiel vers un premier trajet de réception partiel (46, 48) et en un second signal de réception partiel vers un second trajet de réception partiel (50, 52), de sorte que le premier signal de réception partiel contient les impulsions de réception provenant de cibles dures, qui engendrent un écho de signal court, et que le second signal de réception partiel contient un signal de réception, désigné comme signal de "brouillard", engendré par des cibles molles, qui engendrent un écho de signal large et sont formées par des milieux présentant un grand nombre de petites particules, et on détermine à partir du premier signal de réception partiel la présence d'objets dans la zone de surveillance (18) et leur distance, et on détermine à partir du second signal de réception partiel une mesure pour le trouble de visibilité provoqué par des cibles molles.

13. Procédé selon la revendication 12,
dans lequel le rayon de lumière émise (14) comprend une pluralité d'impulsion de lumières individuelles mutuellement successives, et dans lequel une pluralité d'impulsions de réception dans le premier signal de réception partiel sont rassemblées dans un histogramme temporel (110) et l'on détermine la distance à l'objet à partir de l'histogramme (110), et/ou on rassemble une pluralité de portions du second signal de réception partiel, qui suivent respectivement une impulsion de lumière individuelle émise, en un histogramme temporel et on détermine à partir de l'histogramme une mesure pour le trouble de visibilité, en particulier à partir d'une information de niveau qui est récupérée à partir d'une somme via l'histogramme.

14. Procédé selon la revendication 12 ou 13,
dans lequel la zone de surveillance (18) est palpée en déviant le rayon de lumière émise (14) au niveau d'une unité de déflexion mobile (16) périodiquement vers la zone de surveillance (18), et l'on engendre en particulier un signal de position angulaire en fonction d'une situation angulaire de l'unité de déflexion (16) et on sélectionne au moyen du signal de position angulaire un groupe d'impulsions de réception qui sont rassemblées dans un histogramme (110), et dans lequel la distance-objet déterminée à partir de l'histogramme (110) du groupe, est associée à un angle de détection désigné par le signal de position angulaire.

15. Procédé selon l'une des revendications 12 à 14,
dans lequel une optique de réception (34, 16, 22) impose, en raison de sa conception optique, au signal de réception une caractéristique d'intensité à modulation périodique en fonction de la distance à l'objet, avec une longueur de période qui est importante par rapport à la durée d'une impulsion d'émission et qui correspond au maximum à la moitié d'une portée maximum, et dans lequel on reconnaît un trouble de visibilité au moyen d'une corrélation du second signal de réception partiel avec la caractéristique d'intensité modulée connue.
